# EUROPÄISCHE PATENTSCHRIFT

(11) **EP 3 750 675 B1**
(45) Veröffentlichungstag und Bekanntmachung des Hinweises auf die Patenterteilung: **21.06.2023**
(21) Anmeldenummer: 20175776.2
(22) Anmeldetag: 20.05.2020
(51) Int. Cl.: B25J 9/04, B25J 18/02

(54) **ROBOTERARM**
ROBOT ARM
BRAS ROBOTIQUE

(30) Priorität: 20.05.2019 DE 202019102846 U; 20.05.2019 DE 102019113372
(43) Veröffentlichungstag der Anmeldung: 16.12.2020
(73) Patentinhaber: Gerhard Schubert GmbH, 74564 Crailsheim (DE)
(72) Erfinder: Ben Salem, Achraf, 74564 Crailsheim (DE); Yangui, Oussama, 74564 Crailsheim (DE)
(74) Vertreter: Alber, Norbert

(56) Entgegenhaltungen:
- EP-A1- 3 235 609
- EP-A1- 3 305 481
- WO-A1-2016/098814
- CN-A- 107 398 888
- DE-A1-102013 112 802
- US-A- 3 709 379
- US-A- 4 934 278

## Beschreibung

### I. Anwendungsgebiet

Die Erfindung betrifft einen Industrieroboter, insbesondere dessen Roboter-Arm.

### II. Technischer Hintergrund

In der Industrie werden in immer stärkerem Maß Roboter benutzt, welche Werkzeuge halten und führen und sich je nach Anwendungszweck in einer unterschiedlichen Anzahl von Freiheitsgraden bewegen können.

Dabei sind sehr unterschiedliche Konstruktionen von Robotern, insbesondere von Roboterarmen, bekannt, die sich für unterschiedliche Lasten und unterschiedliche Bewegungsgeschwindigkeiten mehr oder weniger eignen:
So sind beispielsweise sogenannte Delta-Roboter, also mit Parallel-Kinematik, sehr gut dafür geeignet, relativ kleine Lasten sehr schnell zu bewegen, allerdings in einem relativ kleinen Bewegungsradius.

Ein serieller Roboterarm, der aus Oberarm und Unterarm besteht, die gelenkig miteinander verbunden sind, hat einen größeren Wirkbereich, ist jedoch in aller Regel langsamer, kann dafür aber höhere Lasten im Vergleich zum Eigengewicht bewegen.

Eine Bauform eines solchen Roboterarmes besteht darin, dass
- der Oberarm um eine erste, z. B. vertikale, Achsrichtung gegenüber der Umgebung schwenkbar ist,
- der Unterarm gegenüber dem Oberarm um eine zweite, insbesondere zur ersten Achsrichtung parallele, Achsrichtung verschwenkbar ist und
- am freien Ende des Unterarmes eine Axialstrebe in ihrer Axialrichtung bezüglich des Unterarmes quer zu dessen Verlaufsrichtung verfahrbar ist, die an einem Ende einen Werkzeugträger für ein Werkzeug besitzt.
- Das Verschwenken zwischen Ober- und Unterarm kann durch eine Parallelogramm-Strebe bewirkt werden, die von einem Exzenter an der Unterarmaufnahme aus betätigt wird, oder auch durch einen Zahnriemen, der gesteuert ein Ritzel auf der Schwenkachse antreibt. Steht die Gewichtsminimierung im Vordergrund, wird die letztgenannte Lösung bevorzugt.

Dabei ist es bekannt, die Axialstrebe als Spindel auszubilden, die in einer Spindelmutter läuft, die sich im Unterarm befindet, wobei die Spindelmutter mittels eines Zahnriemens in Drehung versetzt wird, der im Unterarm umläuft und von einem weiteren Zahnriemen angetrieben wird, der im Oberarm umläuft. Dadurch kann die Axialstrebe in ihrer Axialrichtung relativ zum Roboterarm verfahren und gleichzeitig geführt werden. Ein solcher Roboterarm ist aus DE102013112802A1 bekannt.

Steht die Gewichtsminimierung im Vordergrund, so wird auch das vertikale Verfahren der Axialstrebe z.B. mittels Zahnriemen oder Zahnstange bewirkt. Zusätzlich wird dann eine Führung der Axialstrebe in ihrer Verlaufsrichtung benötigt, entlang der die Axialstrebe verfahrbar ist, jedoch gegenüber dieser Axialführung nicht verdrehbar um die Axialrichtung sein soll.

Deshalb besitzt bei einer bekannten Lösung die Axialstrebe einen unrunden Außenumfang, wobei Abschnitte des Außenumfanges als in axialer Richtung verlaufende, in aller Regel ebene, Führungsflächen verwendet werden.

An diesen Führungsflächen liegt die Axialführung mit mindestens einem Führungskörper an, der vom Grundkörper der Axialführung - die in einer bevorzugten Bauform als in axialer Richtung betrachtet umlaufend geschlossene Führungshülse ausgebildet ist - aus in Richtung der Mitte, also zu der Axialstrebe hin weisend und über den Grundkörper hinaus vorsteht. Eine gefederte Axialführung eines Roboterarms ist aus US3709379A bekannt.

Je nach Anwendungsfall kann es darüber hinaus notwendig sein, dass die Axialstrebe um ihre Axialrichtung drehbar ist und dadurch auch der Werkzeugträger. Dann wird in aller Regel nicht die Axialstrebe relativ zur Axialführung gedreht, sondern die Axialführung gegenüber dem sie tragenden Roboterarm gesteuert gedreht um die Axialrichtung.

### III. Darstellung der Erfindung

### a) Technische Aufgabe

Ausgehend von diesen bekannten Lösungen besteht die Aufgabe gemäß der Erfindung darin, eine möglichst einfach aufgebaute spielfreie Führung der Axialstrebe in der Axialführung mit möglichst geringem Gewicht zur Verfügung zu stellen, denn jedes Spiel in den Führungen und Gelenken eines roboterarmes reduziert die Positioniergenauigkeit von dessen Werkzeug, meist einem Greifer oder Sauger.

### b) Lösung der Aufgabe

Diese Aufgabe wird durch die Merkmale des Anspruchs 1 gelöst. Vorteilhafte Ausführungsformen ergeben sich aus den Unteransprüchen.

Um eine spielfreie Führung der Axialstrebe in beiden Querrichtungen zur axialen Richtung zu gewährleisten, besteht der Grundgedanke der Erfindung darin, dass die Führungskörper unter Vorspannung an der jeweiligen Führungsfläche anliegen. Das Vorspannen der Führungskörper gegenüber dem Grundkörper der Axialführung erfolgt mittels Federn.

Um ein Verkippen um eine Kippachse quer zur axialen Richtung der Axialstrebe in der Axialführung zu minimieren, wird dabei eine ausreichende Führungslänge der Axialführung in axialer Richtung vorgesehen, wobei vorzugsweise der an der Führungsfläche anliegende Führungskörper nicht über die gesamte Führungslänge durchgeht, sondern jeweils ein in axialer Richtung relativ kurzer Führungskörper am Anfang und Ende der Führungslänge vorhanden ist, also pro Führungsfläche ein Paar von Führungskörpern.

Dabei sollte die Kontaktlänge eines Führungskörpers in axialer Richtung vorzugsweise möglichst gering sein, um eine Überbestimmung der Anlage zwischen den beiden Bauteilen, also den beiden Führungskörpern einerseits und der Führungsfläche der Axialstrebe, an der sie anliegen, andererseits zu vermeiden.

Es sei klargestellt, dass anstelle der Führungskörper auch die Führungsflächen der Axialstrebe, dann in die umgekehrte Richtung, nämlich in Richtung Führungskörpern, vorgespannt sein könnte.

In einer ersten Variante können über den Umfang verteilt, insbesondere gleichmäßig verteilt, drei oder mehr Führungsflächen am Außenumfang der Axialstrebe vorhanden sein, wobei die Führungskörper an allen Führungsflächen mit Vorspannung anliegend, so dass mittels der Führungskörper eine Zentrierung der Axialstrebe auf die Längsmittelachse der Axialführung durchgeführt wird.

Wenn jedoch die Vorspannung nicht gegen alle drei Führungsflächen die gleiche ist, ist die tatsächliche Lage der Axialstrebe quer zu ihrer axialen Richtung unbestimmt.

Deshalb liegen bei einer zweiten Variante nur an einer oder zwei der Führungsflächen die Führungskörper mit Vorspannung an.

Dabei sind die an der einen Führungsfläche anliegenden Führungskörper vorgespannt, während die an den gegenüberliegenden Führungsflächen anliegenden Führungskörper nicht vorgespannt und damit ortsfest relativ zur axialen Führung an dieser angeordnet sind.

Abgesehen von einem an den fest montierten Führungskörpern und/oder den daran anliegenden Führungsflächen auftretenden Verschleiß ist damit die Lage der Axialstrebe quer zur Axialrichtung der Axialführung, insbesondere deren Längsmittelachse, definiert.

Um den Verschleiß durch Reibung zwischen Führungskörper und Führungsfläche zu minimieren, sind die Führungskörper vorzugsweise als Wälzkörper ausgebildet, die um eine Drehachse, die parallel zur Führungsfläche verläuft, jedoch um eine quer zur axialen Richtung der Axialführung verlaufende Achse drehbar sind, insbesondere in der Bauform als Wälzlager, also jeweils einem gegenüber einem Außenring drehbaren Innenring und Wälzkörpern zwischen den beiden Lagerringen. Der Außenring kann auf seiner äußeren Mantelfläche eine Beschichtung oder Ummantelung aus beliebigem Material, insbesondere Gummi, Kunststoff oder Metall, besitzen

Zusätzlich wird hierdurch die Kontaktfläche zwischen einem Führungskörper und der Führungsfläche in axialer Richtung minimiert und damit eine geometrische Überbestimmung der Führung der Axialstrebe vermieden.

Vorzugsweise sind die die Wälzkörper, insbesondere Wälzlager, umfassenden Führungskörper - wobei jeder Führungskörper aus entlang der Rotationsachse der Wälzkörper mehreren hintereinander angeordneten Wälzkörpern oder Wälzlagern bestehen kann - in einer Ausnehmung oder Nut der Axialführung angeordnet, die zur Mitte des Querschnitts hin, also in Richtung Axialstrebe hin, offen ist, damit der Führungskörper mit seinem wenigstens einen Wälzkörper über den Grundkörper der Axialführung, insbesondere der Führungshülse, in der diese Ausnehmung oder Nut ausgebildet ist, in Richtung Axialstrebe vorstehen und an deren Führungsflächen anliegen kann.

Vorzugsweise besitzen die Wälzkörper eine zentrische Durchgangsöffnung, wie sie bei Wälzlagern ohnehin vorhanden ist, sodass durch diese - auch wenn mehrere Wälzkörper fluchtend hintereinander angeordnet werden - ein Lagerzapfen gesteckt werden kann, dessen Enden beidseitig über die Stirnseite des wenigstens einen Wälzkörpers hinaus vorstehen.

Vorzugsweise werden die beiden in axialer Richtung beabstandeten Führungskörper eines Paares jedoch nicht einzeln gegenüber dem Grundkörper der Axialstrebe vorgespannt, sondern gegeneinander so vorgespannt, dass die für jeden Führungskörper vorliegende Vorspanneinrichtung eine Komponente aufweist, die in Richtung Axialstrebe, also Mitte des Querschnittes der Axialführung, weist, und natürlich eine durch die Vorspannung der beiden Führungskörper gegeneinander bedingte Komponente zum anderen Führungskörper hin.

Der Vorspannwinkel zwischen der zum anderen Führungskörper hinweisenden Komponente der Vorspannrichtung sollte geringer als 50°, besser geringer als 45°, besser geringer als 40°, besser geringer als 35°, besser geringer als 30° sein, um ein zuverlässiges Bewegen der Führungskörper beider gegeneinander vorgespannter Führungskörper aufeinander zu sicherzustellen.

Eine solche Vorspannung der beiden axial beabstandeten Führungskörper gegeneinander kann auf sehr einfache und kostengünstige Weise mittels jeweils einer Zugfeder erfolgen.

Die zur Axialstrebe hin weisende Komponente der Vorspannrichtung kann dadurch erzielt werden, dass sich die Führungskörper nur in einer schräg zur axialen Richtung verlaufenden, gegeneinander geneigten jeweiligen Bewegungsrichtung bewegen können, beispielsweise indem die über die Stirnseiten der Wälzkörper vorstehenden Lagerzapfen jeweils in einer Führungsnut oder einem Langloch geführt sind, welche in den Flanken der Nut oder Ausnehmung ausgebildet sind, in denen die die Wälzkörper umfassenden Führungskörper angeordnet sind.

Dadurch wird ein sehr einfacher konstruktiver Aufbau erreicht und die Anzahl an vorzusehenden - in der Praxis bei Erlahmen auszuwechselnden - Federn wird zum einen reduziert und insbesondere deren Austauschbarkeit erleichtert, da sie vom Außenumfang des Grundkörpers der Axialführung her zugänglich sind.

Eine besonders einfache Lösung ergibt sich, wenn die Zugfeder mit jeweils einem an ihrem Ende gebogenen Einhänge-Haken eingehängt werden kann, vorzugsweise in eine Ringnut des Lagerzapfens eingehängt werden kann, indem sie in axialer Richtung des Lagerzapfens nur ein begrenztes Spiel hat, beispielsweise von maximal 50 %, besser maximal 30 %, besser maximal 10 % der Dicke des Einhänge-Hakens. Dadurch wird gleichzeitig der Lagerzapfen in seiner Erstreckungsrichtung positioniert und fixiert zu den Flanken der Nut oder Ausnehmung, in der der entsprechende Führungskörper angeordnet ist.

Eine andere Lösung besteht darin, die Zugfeder jeweils mit ihrem Einhänge-Haken an einem Einhänge-Zapfen einzuhängen, der parallel und zum Lagerzapfen beabstandet angeordnet ist in derselben Nut oder Ausnehmung wie der Führungskörper, jedoch zu dem an der gleichen Führungsfläche anliegenden anderen Führungskörper hin versetzt.

Lagerzapfen und Einhänge-Zapfen können durch Verbindungsstreben beidseits der Wälzkörper in Form von jeweils an den in den Endbereichen dieser beiden Zapfen angeordneten Abstands-Blechen, die zwei Durchgangsöffnung einerseits für den Lagerzapfen und andererseits für den Einhänge-Zapfen aufweisen, miteinander verbunden sein.

Die zu führende Axialstrebe kann in bestimmten Anwendungsfällen - beispielsweise wenn am freien Ende der Axialstrebe ein demgegenüber verschwenkbarer Werkzeugträger erforderlich ist - aus zwei Teilstreben bestehen, die in Axialrichtung relativ zueinander verschiebbar sind, und natürlich darüber hinaus jeweils gegenüber der Axialführung unabhängig voneinander verschiebbar sind.

In diesem Fall ist an jeder dieser beiden Teilstreben mindestens eine Führungsfläche am Außenumfang ausgebildet, wobei die Teilstreben auf der gegeneinander weisenden Seite vorzugsweise direkt aneinander anliegen oder an einem Teil der Axialführung.

Vorzugsweise ist der Querschnitt einer Axialstrebe dann prismenförmig, wobei die beiden in Umfangsrichtung aneinander anschließenden Führungsflächen jeder Teilstrebe vorzugsweise in einem rechten Winkel zueinander stehen, und die dritte Umfangsfläche die an der anderen Teilstrebe anliegende Gleitfläche ist.

Die axiale Verfahrbewegung der Axialstrebe wird durch wenigstens einen Motor bewirkt. Vorzugsweise ist dieser wenigstens eine Hub-Motor - wenn zusätzlich ein Verschwenken des Werkzeugträgers am freien Ende der Axialstrebe vorgesehen ist, wird ein zweiter Hub-Motor benötigt - an der Axialführung, insbesondere dessen Grundkörper, befestigt, wodurch eine bei der Montage gut handhabbare Baugruppe entsteht.

Sofern die Axialstrebe um ihre axialer Richtung drehbar sein soll, um beispielsweise das daran befestigte Werkzeug auf die Drehlage eines unrunden zu ergreifenden Produktes einstellen zu können, weist die Axialführung, insbesondere in ihrer Ausbildungsform als Führungshülse, vorzugsweise eine Verzahnung an ihrem Außenumfang auf oder eine umlaufende Umfangsfläche für das Angreifen eines diese Drehbewegung bewirkenden Zahnriemens oder anderen Zugelementes.

### c) Ausführungsbeispiele

Ausführungsformen gemäß der Erfindung sind im Folgenden beispielhaft näher beschrieben. Es zeigen:
- **Figur 1:**: eine Roboterstraße,
- **Figur 2a** - **c:**: einen Teil des Roboterarmes eines der Roboter der Roboterstraße in verschiedenen Ansichten ohne Vorspann-Einrichtung,
- **Figur 3a:**: eine Führungshülse mit der Vorspann-Vorrichtung an einer Axialstrebe mit viereckigem Querschnitt in einer Seitenansicht,
- **Figur 3b:**: in der gleichen Blickrichtung wie Figur 3A eine Schnittdarstellung geschnitten entlang der Linie IIIb - IIIb in Figur 3c,
- **Figur 3c:**: einen Horizontalschnitt entlang der Linie IIIc - IIIc gemäß der Figuren 3a, b,
- **Figur 4:**: eine Aufsicht auf eine Führungshülse mit der Vorspann-Vorrichtung an einer Axialstrebe mit sechseckigem Querschnitt.

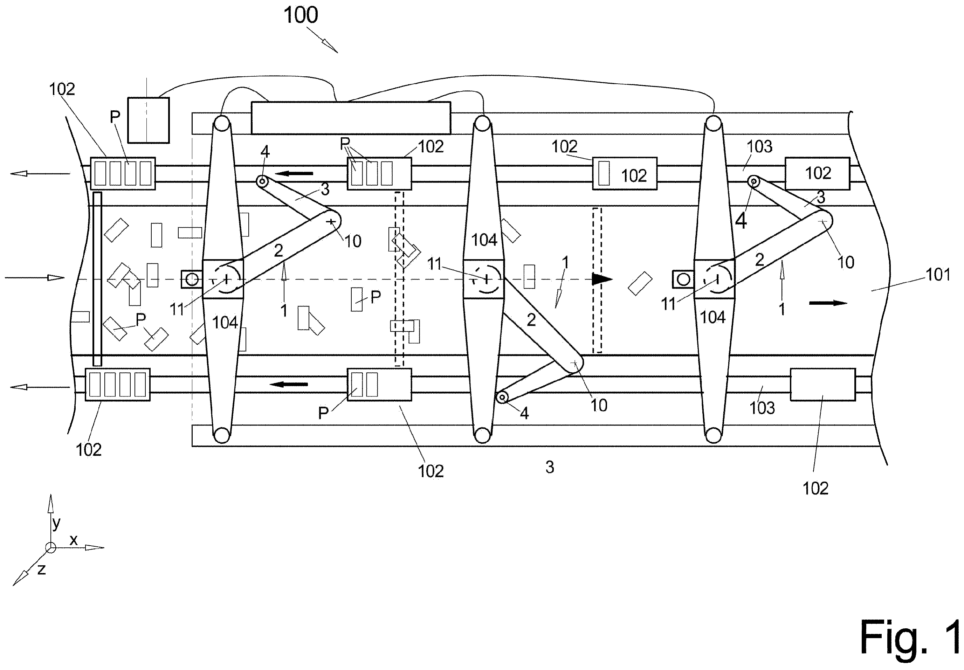

**Figur 1** zeigt eine übliche Pickerstraße oder Roboterstraße **100,** mit deren Hilfe Produkte P, die unregelmäßig auf einem Produkt-Förderer **101** herantransportiert werden, von den Roboterarmen **1** der Roboter **104,** die in Förderrichtung X des Produkt-Förderers **101** hintereinander angeordnet sind, ergriffen und in vorgegebene Positionen in Behältern **102** umgesetzt werden, die auf einem in diesem Fall parallelen Behälter-Förderer **103** heran- und abtransportiert werden.

Die Roboterarme **1** bestehen jeweils aus einem Oberarm **2**, der an einem festen Punkt der Umgebung schwenkbar und gesteuert um eine senkrechte Schwenkachse **11** verschwenkbar ist, sowie einen Unterarm **3**, der um eine ebenfalls vertikale Schwenkachse **10** gegenüber dem freien Ende des Oberarmes **2** gesteuert verschwenkbar ist. Das freie Ende des Unterarmes **3** ist somit in einer lotrecht zu diesen Schwenkachsen **10**, **11** liegenden Ebene, in der Regel einer horizontalen Ebene, der X-Y-Ebene gesteuert beweglich

Wie die folgenden Figuren zeigen, ist am freien Ende jedes Roboterarmes **1** ein Werkzeugträger **23** mit daran befindlichem Werkzeug **22**, der quasi die Hand des Roboterarmes darstellt, nicht direkt befestigt, sondern zum Anheben und Absenken eines daran gehaltenen Produktes **P** eine Axialstrebe **4** am freien Ende des Unterarmes 2 befestigt, die den Werkzeugträger 23 trägt.

Die Axialstrebe **4** erstreckt sich in der Höhe, insbesondere der Vertikalen Z, und ist in dieser Richtung beweglich relativ zum Unterarm 3 angeordnet. An ihrem unteren Bereich befindet sich der Werkzeugträger **23** mit dem daran befindlichen Werkzeug **22**, in diesem Fall einem Sauger **22**.

Zusätzlich soll in den meisten Fällen die Axialstrebe **4** um ihre Längsrichtung **4',** die meist die Vertikale, die Z-Richtung ist, drehbar gestaltet sein, was immer dann notwendig ist, wenn es sich bei den Produkten **P** um unrunde Produkte handelt, die jedoch in einer bestimmten Drehlage an der Ablageposition, z.B. in den Behältern **102,** abgelegt werden müssen.

Ein an einem solchen Roboterarm befestigtes Werkzeug besitzt dann somit vier Freiheitsgrade, nämlich die Bewegungsmöglichkeit in allen drei Raumrichtungen sowie die Drehbarkeit um die aufrechte Achse **4`.**

In einigen Anwendungsfällen ist es jedoch notwendig, dass zusätzlich das Werkzeug um eine quer zur axialen Richtung **4',** in der Regel um eine horizontal liegende, Schwenkachse **23'** verschwenkbar ist, beispielsweise wenn liegend auf einem Produkt-Förderer **101** angelieferte Produkte, z.B. Kekse, in Behältern **2** schräg aufrecht stehend, also geschindelt, abgestellt werden sollen.

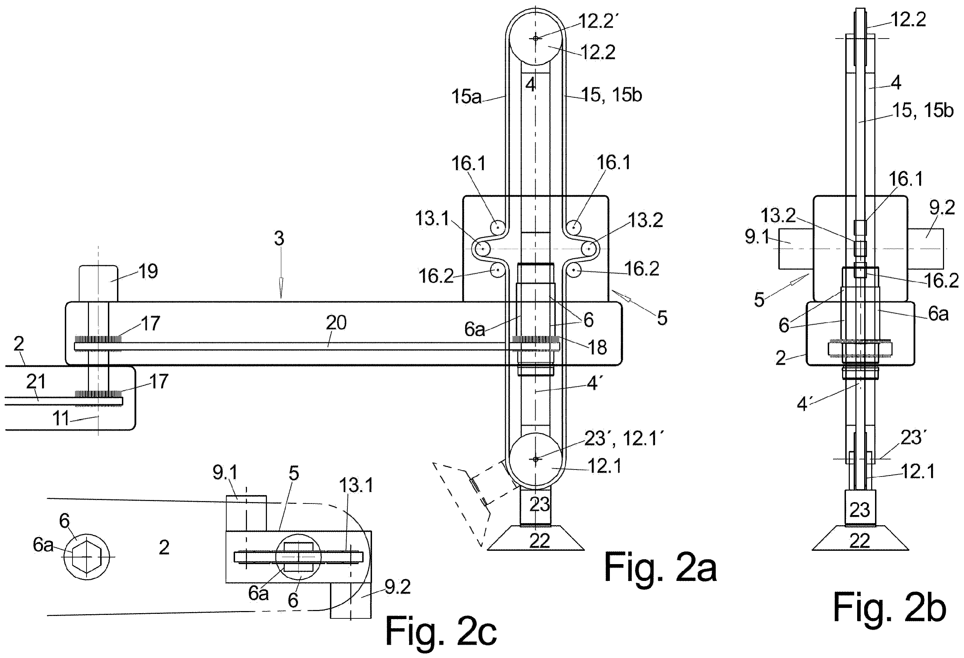

Einen um einen solchen fünften Freiheitsgrad erfindungsgemäßen Roboterarm zeigen die **Figuren 2a** - **c** in einer ersten Bauform:
Dabei wird der für das Verfahren der Axialstrebe **4** in der Höhe benötigte HubAntrieb gleichzeitig genutzt, um das Verschwenken des Werkzeugträgers **23** sowie des daran wechselbar angeordneten, auf das Produkt **P** abgestimmten, Werkzeuges, hier eines Saugers **22,** um eine horizontale Schwenkachse **23'** zu realisieren.

Zu diesem Zweck wird die Verfahrung der Vertikalstrebe **4** entlang ihrer Längsrichtung **4'** relativ zum Unterarm **3** mittels eines endlosen Zahnriemens **15** durchgeführt, der um zwei Umlenkrollen **12.1** und **12.2** umläuft und mit diesen wirkverbunden ist, welche sich am unteren und oberen Ende der Axialstrebe **4** befinden.

In der Axialeinheit **5** ist eine Axialführung **6** ausgebildet, entlang der die Axialstrebe **4** geführt wird. Im vorliegenden Fall besteht die Axialführung **6** aus dem Innenumfang einer Führungshülse **6a,** die insbesondere drehfest in der Axialeinheit **5** angeordnet ist, und durch die sich die Axialstrebe **4** von oben nach unten hindurch erstreckt, während die beiden beidseits der Axialstrebe **4** verlaufenden Trume **15a, 15b** des Zahnriemens **15** außerhalb der Führungshülse **6a** verlaufen.

Die auf den beiden einander gegenüberliegenden Seiten bezüglich der Axialstrebe **4** verlaufenden beiden Trumen **15a, 15b** stehen jeweils mit einer gesteuert antreibbaren Antriebsrolle **13.1, 13.2** in Wirkverbindung, die zur Erzielung eines besseren Umschlingungswinkels etwas weiter von der Axialstrebe **4** entfernt sind als ein direkt von der oberen zur unteren Umlenkrolle **12.1, 12.2** verlaufendes Trum **15a, 15b** des Zahnriemens **15.** Dementsprechend ist beidseits jeder der Antriebsrollen **13.1, 13.2** an dem entsprechenden Trum **15a, 15b** des Zahnriemens **15** anliegend eine von zwei Umlenkrollen **16.1, 16.2** angeordnet, die den Zahnriemen umlenkt zu der entsprechenden Antriebsrolle **13.1, 13.2.**

Wie die **Figuren 2b** und **2c** zeigen, liegen die Umlenkrollen **12.1, 12.2, 16.1, 16.2** sowie die Antriebsrollen **13.1, 13.2** in einer Ebene, der Umlaufebene des endlosen Zahnriemens **15.**

Die Antriebsrollen **13.1, 13.2** stehen mit dem Zahnriemen **15** in Eingriff, indem sie insbesondere mit dessen Innenseite - bezogen auf die endlos umlaufende Form des Zahnriemens - in Kontakt stehen, die eine Zahnung aufweist, wobei vorzugsweise auch die Umfangsflächen der Umlenkrollen **12.1, 12.2** eine dazu passende Zahnung aufweisen.

Jede der beiden Antriebsrollen **13.1, 13.2** wird von zwei Hub-Motoren **9.1, 9.2** angetrieben, die an der Axialeinheit **5** befestigt sind.

Der Werkzeugträger **23** ist drehfest mit der unteren Umlenkrolle **12.1** verbunden, sodass die Schwenkachse **23',** um die der Werkzeugträger **23** und damit das Werkzeug **22** verschwenkt werden können, die Rollen-Achse **12.1'** dieser unteren Umlenkrolle **12.1** ist.

Aus **Figur 2a** wird ersichtlich, dass folgende Bewegungen erzielbar sind durch entsprechende Ansteuerung der Hub-Motoren **9.1, 9.2:**
- Verfahren der Axialstrebe **4** in der Führungshülse **6a** nach oben, indem die beiden - hinsichtlich des Wirkdurchmessers gleich großen - Antriebsrollen **13.1 13.2** gegenläufig und mit gleicher Drehzahl angetrieben werden, hiervon die linke Antriebsrolle **13.1** im Uhrzeigersinn, die andere, **13.2** entgegen dem Uhrzeigersinn.
   Bei Drehung der Antriebsrolle **13.1** entgegen dem Uhrzeigersinn und der anderen Antriebsrolle **13.2** im Uhrzeigersinn wird die Axialstrebe **4** nach unten verfahren.
   Der Werkzeugträger **23** verbleibt dabei relativ zur Rollen-Achse **12.1',** also zu seiner Schwenkachse **23',** in der Schwenklage ohne diese zu ändern.
- Dagegen wird eine Schwenkbewegung des Werkzeugträgers **23** um die Schwenkachse 23' bewirkt, indem die untere Umlenkrolle **12.1** um den entsprechenden Winkelbetrag gedreht wird, was durch entsprechende Abwärtsbewegung des einen Trums **15a** und Aufwärtsbewegung des anderen Trums **15b** oder umgekehrt erfolgt.
   Sind diese beiden Bewegungen gleich schnell, also die Verlagerung der beiden Trume pro Zeiteinheit beträgt dieselbe Strecke, so behält dabei die Axialstrebe **4** ihre ursprüngliche Höhenlage bei.
- Natürlich können auch beide Bewegungen überlagert, also gleichzeitig stattfinden, wobei die Differenzgeschwindigkeit zwischen den beiden Trumen **15a, 15b** das Verdrehen der unteren Umlenkrolle **12.1** und damit Verschwenken des Werkzeugträgers **23** bewirkt, und sich gleichzeitig die Axialstrebe **4** z.B. nach oben bewegt, wenn sich die beiden Trume **15a, 15b** dabei gleichzeitig nach oben bewegen.

Um die Drehbarkeit der Axialstrebe **4** und damit des daran befestigten Werkzeuges **22** um die aufrechte Längsrichtung **4'** der Axialstrebe **4** zu gewährleisten, ist die gesamte Axialeinheit einschließlich der drehfest um die axiale Richtung **4'** darin angeordnete Führungshülse **6a** drehbar um die axiale Richtung **4'** am Unterarm **3** angeordnet, wobei in diesem Fall das Gehäuse der Axialeinheit **5** auf der Oberseite im freien Endbereich des Unterarmes **3** aufsitzt und sich die Führungshülse **6a** der Axialeinheit **5** nach unten in das hohle Innere des Unterarmes **3** hinein erstreckt.

Für die Drehung der Axialeinheit **5** muss deren Führung **6,** insbesondere die Führungshülse **6a,** gedreht werden um die axiale Richtung **4',** da die Axialstrebe **4** drehfest um die Erstreckungsrichtung **4'** in dieser geführt ist.

Zu diesem Zweck ist auf dem Außenumfang der Führungshülse **6a** eine Verzahnung angeordnet, über die ein endloser Zahnriemen **15** umläuft, der angetrieben wird von einer Zahnrolle **17,** die am anderen Ende des Unterarmes **3** angeordnet ist, in diesem Fall drehbar um die Schwenkachse **11,** um die Unterarm **3** und Oberarm **2** relativ zueinander verschwenkbar sind.

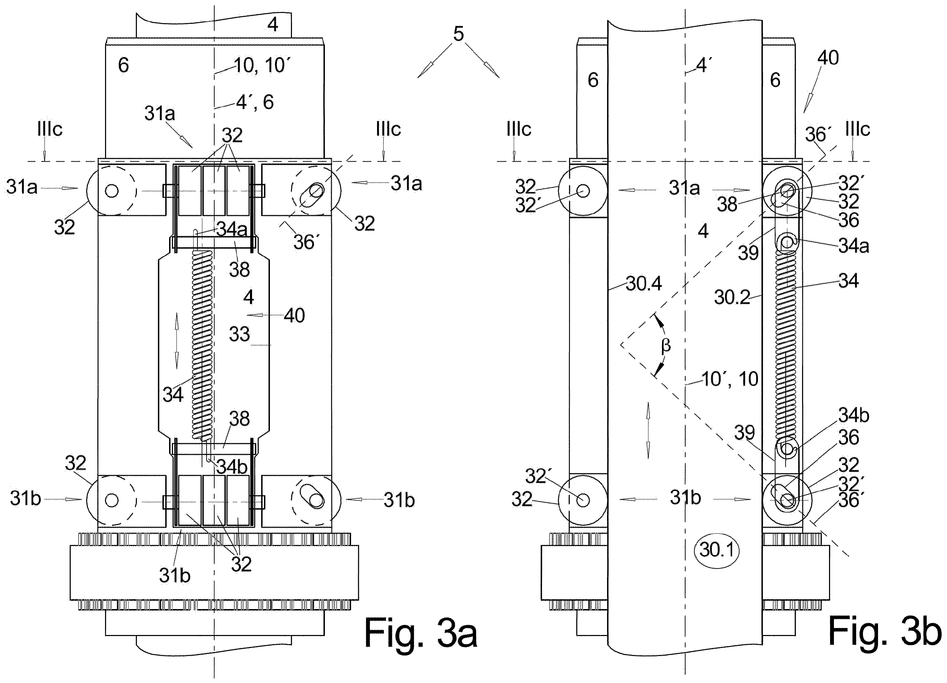

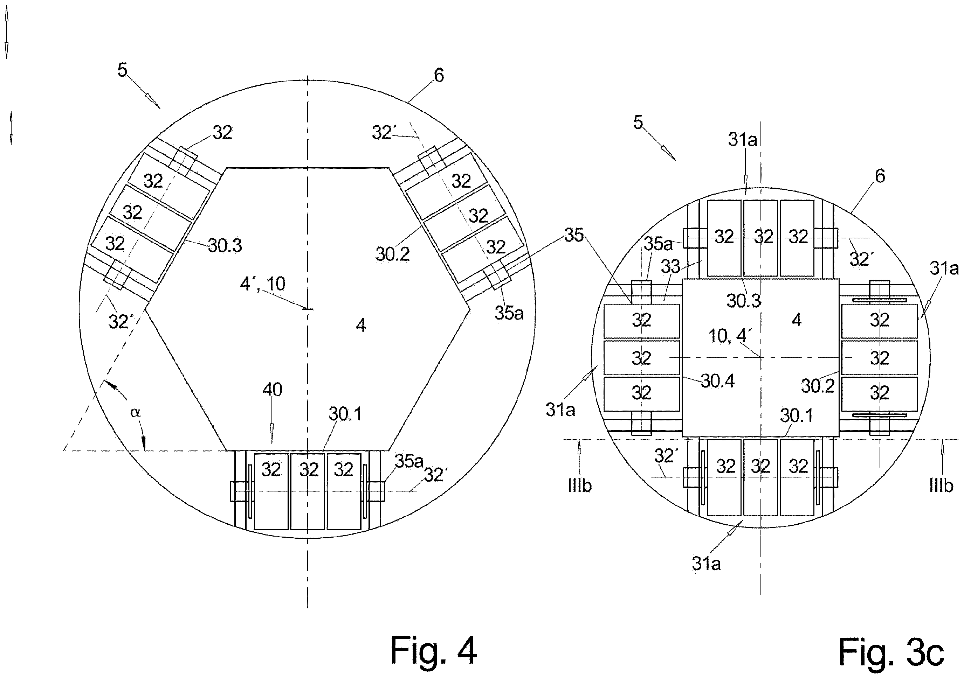

Wie dargestellt, kann diese Zahnrolle **24** angetrieben werden von einem Dreh-Motor **19,** der ebenfalls direkt auf der Schwenkachse 11 sitzt, oder mittels eines weiteren, in **Figur 3** dargestellten Zahnriemens **21.1,** der im hohlen Oberarm **2** verläuft und mit der Zahnrolle **17** in Wirkverbindung steht und von einem Dreh-Motor **19** angetrieben wird, der sich an der Roboter-Basis, also an oder auf dem vom Unterarm 3 abgewandten Ende des Oberarmes **2** befindet.

In den **Figuren 3a** - **c** ist eine Axial-Einheit 5 dargestellt, deren Axial-Strebe 4 - wie am besten in **Figur 3c** zu erkennen - einen Querschnitt aufweist in Form eines Rechtdecks, insbesondere eines Quadrats, und einer Führungshülse 6, bei der die Durchgangsöffnung einen analog geformten, nur geringfügig größeren, Querschnitt besitzt, so dass sich die Axial-Strebe 4 hindurch erstrecken kann.

An jeder der vier Umfangsflächen liegt die Führungshülse 6 mit - wie am besten in **Figur 3a, b** zu erkennen - einem Paar aus zwei in axialer Richtung 10 beabstandeten Führungskörpern 31a, b an, die jeweils aus einem Paket von mehreren, in diesem Fall drei, koaxial zueinander angeordneten Wälzlagern 32 bestehen, welche auf einem gemeinsamen Lagerbolzen 35 aufgesteckt sind, gleich groß sind und mit ihren Umfangsflächen an je einer der damit als Führungsflächen 30.1- 30.4 wirkenden Umfangsflächen anliegen.

Wie **Figur 3c** zeigt, sind dabei die beiden an zwei benachbarten Führungsflächen 30.3, 30.4 anliegenden, insgesamt vier Führungskörper bestehend aus zwei Paaren mit je zwei Führungskörpern 31a, 31b, an jeweils einer ortsfesten Position in einem Durchbruch 33 in der Wandung der Führunghülse 6 gelagert, der sich über die gesamte Länge der Vorspann-Vorrichtung 40 in axialer Richtung 10 erstreckt, also von dem Führungskörper 31a bis zu dem Führungskörper 31b.

Die linienförmigen Kontaktflächen dieser zwei Paare von je zwei Führungskörpern 31a, 31b definieren einen Anlage-Winkel aus zwei im rechten Winkel zueinander stehenden Anlageflächen, in den die Axial-strebe 4 quer zur Längsrichtung 10 hineingedrückt wird, indem die beiden anderen Paare von Führungskörpern 31a, 31b, die an den beiden anderen Führungsflächen 30.1, 30.2 anliegen, gegen diese beiden Führungsflächen vor gespannt sind, wie am besten in **Figur 3c** zu erkennen:
Denn deren Führungskörper 31a, 31b in Form der jeweiligen Pakete aus Wälzlagern 32 sind nicht an einer fixen Position in der Führunghülse 6 gelagert, sondern - wie in **Figur 3b** zu erkennen - gegenüber dieser verschiebbar in Verlaufsrichtung 36' eines zueinander fluchtenden Paares von Langlöchern oder Nuten 36, in denen die Enden 35a, b des Lagerbolzen 35 jedes Paketes verschiebbar aufgenommen sind.

In Blickrichtung der Wälzkörper-Achsen 32' betrachtet wie in **Figur 3b****,** liegt diese Verlaufsrichtung 36' etwa in einem 45° Winkel sowohl zur Längsrichtung 10 als auch zu der lotrecht auf der Wälzkörper-Achse 32' stehenden Querrichtung, wobei die Verlaufsrichtungen 36' eines Paares von Führungskörpern 31a, b mit zunehmendem radialen Abstand von der Längsmitte 10' der Führunghülse 6 auseinander laufen.

Die in dieser Ansicht betrachteten Verlaufsrichtungen 36' nehmen also zueinander einen doppelten Vorspann-Winkels β zueinander ein, der nach radial außen bezüglich der Längsmitte 10' offen ist und kleiner als 180° ist.

Dabei sind die Lagerbolzen 35 dieser beiden Paare von Führungskörpern 31a, b entlang der Verlaufsrichtung 36' in Richtung des Innenraumes, also der Durchgangsöffnung der Führungshülse 6 und der darin befindlichen Axialstrebe 4 vor gespannt, indem die beiden Lagerbolzen 35 eines Paares von Paketen von Wälzkörper 32 in Längsrichtung 10 gegeneinander vorgespannt sind durch eine dazwischen angeordnete Zugfeder 34.

Die Zugfeder 34 ist jedoch - vorzugsweise aus Platzgründen - mit ihren zu Einhängehaken gebogenen Enden 34a, b nicht direkt an den beiden Lagerbolzen 35 eingehängt, sondern an jeweils einem Einhängebolzen 38, die jeweils parallel verlaufend zu einem der Lagerbolzen 35 und in Richtung des anderen Führungskörpers 31b, 31a zum Lagerbolzen 35 versetzt sind.

Jeder Einhängebolzen 38 ist mit seinem benachbarten Lagerbolzen 35 über zwei Verbindungsplatten 39 gelenkig verbunden, indem jede der Verbindungsplatten 39 zwei Durchgangsbohrungen aufweist entsprechend dem Durchmesser von Einhängebolzen 38 einerseits und Lagerbolzen 35 andererseits, deren Enden sich durch je eine der Durchgangsbohrungen hindurch erstrecken. Je eine Verbindungsplatte 39 ist an je einem der stirnseitigen Enden des Paketes aus Wälzkörpern 32 angeordnet.

Vorzugsweise ist die - pro Vorspann-Einrichtung 40 vorzugsweise nur eine - Zugfeder 34 in der Mitte der axialen Erstreckung zwischen den Verbindungsplatten 39 fixiert, indem an dieser Stelle die Einhängebolzen 38 eine - nicht erkennbare - ringförmig umlaufende Einhänge-Nut aufweisen, in welchen der Einhänge-Haken 34a, b aufgenommen sind.

Es soll klargestellt sein, dass - auch bei Verwendung nur einer einzigen Zugfeder 34 pro Vorspann-Vorrichtung 40 - diese mit entsprechend verlängerten Eingänge-Haken 34a, b auch direkt an den Lagerbolzen 35 eingehängt werden könnte, wenn eine gerade Anzahl von Wälzkörpern 32 pro Führungskörper 31a, b verwendet wird, dann natürlich in der Mitte des Paketes aus axial aufeinanderfolgenden Wälzkörpern 32.

Somit wird durch die beiden an benachbarten zwei von vier Umfangsflächen 30.1, 30.2 der Axialstrebe 4 anliegenden Vorspann-Einrichtungen 40 die Axialstrebe 4 in den Winkel zwischen den beiden anderen Anlageflächen 30.3, 30.4 hineingedrückt und befindet sich immer in einer definierten Position quer zur Längsrichtung 10.

**Figur 4** zeigt einen Schnitt durch eine bevorzugte Axial-Einheit 5, bei der die Axialstrebe 4 einen Querschnitt in Form eines regelmäßigen Sechsecks aufweist.

Dabei liegt die Führunghülse 6 mit Führungskörper 31a, b nur an jeder zweiten der sechs Umfangsflächen an, die damit als Führungsflächen 30.1 - 30.3 wirken.

Auch hier liegt die Führunghülse 6 an jeder dieser Führungsflächen 30.1 - 30.3 mit einem Paar von axial beanstandeten Führungskörpern 31a, b an analog zur zuvor beschriebenen Bauform mit einem quadratischen Querschnitt der Axialstrebe 4 gemäß der **Figuren 3a** - **c.**

Bei nur drei Führungsflächen 30.1 - 30.3 genügt es, dass die Führungskörper 31a, b bzw. das Paar von Führungskörpern 31a, b an nur einer 30.1 dieser drei Führungsflächen 30.1 - 30.3 mit Vorspannung anliegt und als Vorspann-Vorrichtung 40 ausgebildet ist, insbesondere wie zuvor anhand der **Figuren 3a** - **c** beschrieben.

Die anhand der **Figur 4** erläuterte Lösung ist selbstverständlich auch anwendbar auf einen Querschnitt einer Axialstrebe 4 in Form eines regelmäßigen Dreiecks, wobei dann alle drei Umfangsflächen der Axialstrebe 4 als Führungsflächen 30.1 - 30.3 genutzt werden müssen, der Querschnitt der gesamten Einheit dadurch aber größer wird.

### BEZUGSZEICHENLISTE

- 1: Roboter-Arm
- 2: Oberarm
- 3: Unterarm
- 4: Axialstrebe
- 4': Axialrichtung, Längsrichtung
- 5: Axial-Einheit
- 6: Axialführung,
- 7a, b: Befestigungspunkt
- 7: Verlaufsrichtung
- 8: Umgebung
- 9: 9.1, 9.2 Hubmotor
- 10: Längsrichtung
- 11: Schwenkachse
- 12: Schwenkachse
- 11: Schwenkachse
- 12.1, 12.2: Umlenkrolle
- 12.1', 12.2': Rollenachse
- 13, 13', 13": Antriebsrolle
- 14: Wickelrolle
- 15: Zugelement, Zahnriemen
- 15a, b: Trum
- 16.1, 16.2: Umlenkrolle
- 17: Zahnrolle
- 18: Zahnrolle
- 19: Drehmotor
- 20: Zugelement
- 21: Zugelement
- 22: Werkzeug, Sauger
- 23: Werkzeugträger
- 23': Schwenkachse
- 30.1 - 30.4: Führungsfläche
- 31a, b: Führungskörper
- 32: Wälzkörper, Wälzlager
- 32': Wälzkörper-Achse
- 3: Ausnehmung, Durchbruch
- 34: Zugfeder
- 34': Vorspannrichtung
- 34a, b: Einhänge-Haken
- 35: Lagerbolzen
- 35a, b: Ende
- 36: Nut, Langloch
- 36': Verlaufsrichtung
- 36a': Komponente
- 36b': Komponente
- 37: Feder-Ausnehmung
- 38: Einhängebolzen
- 39: Verbindungsstrebe, Verbindungsplatte
- 40: Vorspann-Vorrichtung

- 100: Roboterstraße
- 101: Produkt-Förderband
- 102: Behälter
- 103: Behälter- Förderband
- 104: Roboter

- α: Zwischenwinkel
- β: Vorspannwinkel
- P: Produkt

## Patentansprüche

1. **Roboterarm (1)** mit
- einer Axial-Einheit (**5**), die eine Axialführung (**6**) umfasst und am Roboterarm (**1**) befestigt ist,
- einer Axialstrebe (**4**), die relativ zu der Axialführung (**6**) in ihrer Axialrichtung (**4'**) verfahrbar ist,
- die Führungsflächen (**6a**) der Axialführung (**6**) die Axialstrebe (**4**) drehfest führen
- indem die Axialführung (**6**) in Axialrichtung (**4'**) betrachtet eine unrunde Innenkontur aufweist, die formschlüssig mit einem entsprechend unrunden Außenumfang der Axialstrebe (**4**) zusammenwirkt,
- die Axialstrebe (**4**) in Axialrichtung (**4'**) betrachtet wenigstens drei in Axialrichtung (4') verlaufende Führungsflächen (**30.1 - 30.3**) aufweist, an denen jeweils mindestens je ein Führungskörper (**31a**) der Axialführung (**6**) anliegt,
- bei mindestens einer der Führungsflächen (**30.1**) der daran anliegende mindestens eine Führungskörper (**31a**) in Richtung dieser Führungsfläche (**30.1**) mittels einer Vorspann-Vorrichtung (**40**) vorgespannt ist oder umgekehrt,
- wobei in Axialrichtung (4') beabstandet zwei Führungskörper (**31a, b**) angeordnet sind, die an der gleichen Führungsfläche (**30.1**) anliegen,
- das Vorspannen der Führungskörper (**31a, b**)
- entweder gegenüber dem Grundkörper der Axialführung (**6**) mittels Federn erfolgt
- oder gegeneinander so mittels einer Zugfeder (**34**) erfolgt, dass die für jeden Führungskörper vorliegende Vorspanneinrichtung eine Komponente aufweist, die in Richtung Axialstrebe (**4**), also Mitte des Querschnittes der Axialführung (**6**), weist, und eine durch die Vorspannung der beiden Führungskörper (**31a, b**) gegeneinander bedingte Komponente zum anderen Führungskörper hin aufweist,
**dadurch gekennzeichnet, dass**
- die Zugfeder (**34**) in einer zum Außenumfang des Grundkörpers der Axialführung (**6**) offenen Feder-Ausnehmung (**37**) so aufgenommen ist, sodass die Zugfeder (**34**) vom Außenumfang her ergriffen und ausgewechselt werden kann.

2. Roboterarm nach Anspruch **1**
**dadurch gekennzeichnet, dass**
- die Axialstrebe (**4**) nur drei über den Umfang verteilte, insbesondere gleichmäßig über den Umfang verteilte, Führungsflächen (**30.1 - 30.3**) aufweist,
- deren Zwischenwinkel (**α**) insbesondere ungleich 90° beträgt.

3. Roboterarm nach einem der vorhergehenden Ansprüche,
**dadurch gekennzeichnet, dass**
- die Axialstrebe (**4**) zwei Paare von je zwei, insbesondere bezüglich der Mitte des Querschnittes der Axialstrebe (**4**), einander gegenüberliegende, in Axialrichtung (4') verlaufende Führungsflächen (**30.1 - 30.4**) aufweist,
- wobei vorzugsweise die Führungsflächen (**30.1, 30.2**) eines Paares parallel zueinander verlaufen.

4. Roboterarm nach einem der vorhergehenden Ansprüche,
**dadurch gekennzeichnet, dass**
- nur der an der einen Führungsfläche (**30.1**) eines solchen Paares anliegende wenigstens eine Führungskörper (**31a**) gegenüber dieser Führungsfläche (**30.1**) vorgespannt ist.

5. Roboterarm nach einem der vorhergehenden Ansprüche,
**dadurch gekennzeichnet, dass**
- die, insbesondere jeder, Führungskörper (**31a, b**) wenigstens einen Wälzkörper (**32**), insbesondere wenigstens ein Wälzlager (**32**), umfasst.

6. Roboterarm nach Anspruch 5,
**dadurch gekennzeichnet, dass**
- die Wälzkörper (**32**), insbesondere Wälzlager (**32**), eine zentrische Durchgangsöffnung (**32a**) aufweisen, durch die sich ein Lagerbolzen (**35**) erstreckt,
- dessen Enden (**35a, b**) beidseitig über die Stirnseite des wenigstens einen Wälzkörpers (**32**), insbesondere Wälzlagers (**32**), hinaus vorstehen.

7. Roboterarm nach einem der Ansprüche 5 oder 6
**dadurch gekennzeichnet, dass**
- die Lagerbolzen (**35**), der beiden in Axialrichtung (4') beabstandeten Führungskörper (**31a, b**), die Wälzkörper (**32**) umfassen, gegeneinander vorgespannt sind, insbesondere mittels einer Zugfeder (**34**),
- insbesondere indem die Enden der Lagerbolzen (**35**) in Nuten (**36**) oder Langlöchern (**36**) des Grundkörpers der Axialführung (**6**) geführt sind, deren Verlaufsrichtung (**36'**) eine in Richtung Axialstrebe (4) weisende Komponente (**36a'**) sowie eine zum anderen Führungskörper (**31a, b**) hin weisende Komponente (**36b'**) aufweisen.

8. Roboterarm nach Anspruch 7
**dadurch gekennzeichnet, dass**
- die Lagerbolzen (**35**) an jeweils gleicher Axialposition eine Einhängenut aufweisen,
- die sich im montierten Zustand der Führungskörper (**31a, b**) zwischen den Flanken der Feder-Ausnehmung (**37**) befinden,
- die Einhängenut etwas breiter ist als das geköpfte, insbesondere zu einem Einhänge-Haken (**34a, b**) gebogene, Ende der Zugfeder (**34**), welcher im montierten Zustand in der Einhängenut aufgenommen ist.

9. Roboterarm nach einem der Ansprüche 5 - 7,
**dadurch gekennzeichnet, dass**
- die Zugfeder (**34**) mit jedem ihrer Einhänge-Haken (34a, b) an jeweils einem Einhängebolzen (**38**) eingehängt ist,
- der Einhängebolzen (**38**) an dem einen Lagerbolzen (**35a**) beabstandet befestigt ist, beabstandet in Richtung zum anderen, in Axialrichtung (**4'**) beabstandeten, Lagerbolzen (**35b**) hin.

10. Roboterarm nach Anspruch 9,
**dadurch gekennzeichnet, dass**
Einhängebolzen (**38**) und Lagerbolzen (**35**) miteinander verbunden sind über zwei in ihrer Erstreckungsrichtung beanstandete Verbindungsstreben (39), insbesondere Verbindungsplatten (**39**), die im gleichen Abstand zueinander angeordnete Durchgangsbohrungen (**39a, b**) aufweisen, durch deren eine sich der Lagerbolzen (**35**) und durch deren andere sich der Einhängebolzen (**38**) erstreckt.

11. Roboterarm nach einem der vorhergehenden Ansprüche,
**dadurch gekennzeichnet, dass**
- der Vorspannwinkel (**β**) zwischen der zum anderen Führungskörper (**31a, b**) hin weisenden Komponente (**36b'**) und der Axialrichtung (**4'**) < 50°, besser < 45°, besser < 40°, besser < 35°, besser < 30° ist.

12. Roboterarm nach einem der vorhergehenden Ansprüche,
**dadurch gekennzeichnet, dass**
- die Axialführung (**6**) eine Führungshülse (**6**) ist.

13. Roboterarm nach einem der vorhergehenden Ansprüche,
**dadurch gekennzeichnet, dass**
- die Axialführung (6) an einem Unterarm (**3**) eines Roboterarmes (1) befestigt ist, insbesondere um ihre Axialrichtung drehbar.

14. Roboterarm nach einem der vorhergehenden Ansprüche,
**dadurch gekennzeichnet, dass**
- die Axialstrebe (**4**) zwei Teilstreben (**4a, b**) umfasst, die in Axialrichtung (**4'**) relativ zueinander sowie jeweils zur Axialführung (**6**) verschiebbar sind,
- an jeder der beiden Teilstreben (**4a, b**) wenigstens eine Führungsfläche (**30.1**) angeordnet ist.

15. Roboterarm nach Anspruch 14,
**dadurch gekennzeichnet, dass**
- die beiden Teilstreben (**4a, b**) einen prismen-förmigen Querschnitt aufweisen,
- an jeder der beiden Teilstreben (**4a, b**) zwei Führungsflächen **(30.1** - **30.2)** angeordnet sind,
- die beiden Führungsflächen (**30.1, 30.2**) in Axialrichtung (4') vorzugsweise im rechten Winkel zueinander stehen,
- vorzugsweise die dritte Fläche des Prismas eine an der anderen Teilstrebe (**4b, a**) anliegende Gleitfläche ist.

16. Roboterarm nach einem der vorhergehenden Ansprüche,
**dadurch gekennzeichnet, dass**
- eine Axial-Antriebseinheit (8) mit wenigstens einem Hub-Motor vorhanden ist, welche die Verfahrbewegung der Axialstrebe (**4**) bewirkt,
- alle Hub-Motore an der Axialführung (**6**) befestigt sind.

17. Roboterarm nach einem der vorhergehenden Ansprüche mit
- einem Oberarm (**2**), der gegenüber der Umgebung (**9**) um eine, insbesondere nur eine, erste Schwenkachse (**10**) verschwenkbar ist,
- einem Unterarm (**3**), der gegenüber dem Oberarm (**2**) um eine zweite, insbesondere nur eine zweite, Schwenkachse (**11**) am Oberarm (**2**) schwenkbar befestigt ist,
**dadurch gekennzeichnet, dass**
- die Axialführung (**6**) am freien Ende des Unterarmes (**3**) befestigt ist.

## Claims

1. Robot arm (1) with
- an axial unit (5) which comprises an axial guide (6) and is fastened to the robot arm (1),
- an axial strut (4) which is movable relative to the axial guide (6) in its axial direction (4'),
- the guide surfaces (6a) of the axial guide (6) guide the axial strut (4) in a rotationally fixed manner
- in that the axial guide (6), viewed in the axial direction (4'), has a non-circular inner contour which interacts positively with a correspondingly non-circular outer circumference of the axial strut (4),
- the axial strut (4), viewed in the axial direction (4'), has at least three guide surfaces (30.1 - 30.3) which run in the axial direction (4') and against each of which at least one guide body (31a) of the axial guide (6) bears,
- in the case of at least one of the guide surfaces (30.1), the at least one guide body (31a) resting thereon is prestressed in the direction of this guide surface (30.1) by means of a prestressing device (40) or vice versa,
- wherein two guide bodies (31a, b) are arranged spaced apart in the axial direction (4') and bear against the same guide surface (30.1),
- the pre-tensioning of the guide bodies (31a, b)
- either with respect to the basic body of the axial guide (6) by means of springs
- or with respect to one another by means of a tension spring (34) in such a way that the pretensioning device present for each guide body has a component which points in the direction of the axial strut (4), i.e. the centre of the cross-section of the axial guide (6), and has a component which is conditioned by the pretensioning of the two guide bodies (31a, b) with respect to one another and points towards the other guide body,
**characterIsed In that**
- the tension spring (34) is received in a spring recess (37) open towards the outer circumference of the base body of the axial guide (6) in such a way that the tension spring (34) can be gripped and replaced from the outer circumference.

2. Robot arm according to claim 1,
**characterised In that**
- the axial strut (4) has only three guide surfaces (30.1 - 30.3) distributed over the circumference, in particular evenly distributed over the circumference,
- whose intermediate angle (α) is in particular not equal to 90°.

3. Robot arm according to one of the preceding claims,
**characterised In that**
- the axial strut (4) has two pairs of guide surfaces (30.1 - 30.4) each, in particular opposite one another with respect to the centre of the cross-section of the axial strut (4), and running in the axial direction (4'),
- wherein preferably the guide surfaces (30.1, 30.2) of a pair run parallel to each other.

4. Robot arm according to one of the preceding claims,
**characterised In that**
- only the at least one guide body (31a) resting on the one guide surface (30.1) of such a pair is prestressed relative to this guide surface (30.1).

5. Robot arm according to one of the preceding claims,
**characterised in that**
- the, in particular each, guide body (31a, b) encloses at least one rolling element (32), in particular at least one rolling bearing (32).

6. Robot arm according to claim 5,
**characterised in that**
- the rolling bodies (32), in particular rolling bearings (32), have a central through-opening (32a) through which a bearing pin (35) extends,
- the ends (35a, b) of which project on both sides beyond the end face of the at least one rolling element (32), in particular rolling bearing (32).

7. Robot arm according to one of the claims 5 or 6,
**characterised in that**
- the bearing bolts (35) of the two guide bodies (31a, b), which are spaced apart in the axial direction (4') and comprise the rolling bodies (32), are prestressed against one another, in particular by means of a tension spring (34),
- in particular **in that** the ends of the bearing bolts (35) are guided in grooves (36) or elongated holes (36) in the base body of the axial guide (6), the direction (36') of which grooves or holes has a component (36a') pointing in the direction of the axial strut (4) and a component (36b') pointing towards the other guide body (31a, b).

8. Robot arm according to claim 7,
**characterised in that**
- the bearing bolts (35) each have a suspension groove at the same axial position,
- which, in the assembled state of the guide bodies (31a, b), are located between the flanks of the spring recess (37),
- the suspension groove is somewhat wider than the headed end of the tension spring (34), which is bent in particular to form a suspension hook (34a, b) and is received in the suspension groove in the assembled state.

9. Robot arm according to one of the claims 5-7,
**characterised In that**
- the tension spring (34) is suspended with each of its suspension hooks (34a, b) on a respective suspension bolt (38),
- the suspension bolt (38) is fastened to the one bearing bolt (35a) in a spaced manner in the direction of the other bearing bolt (35b) spaced in the axial direction (4').

10. Robot arm according to claim 9,
**characterised In that**
suspension bolt (38) and bearing bolt (35) are connected to one another via two connecting struts (39), in particular connecting plates (39), spaced apart in their direction of extension, which have through holes (39a, b) arranged at the same distance from one another, through one of which the bearing bolt (35) extends and through the other of which the suspension bolt (38) extends.

11. Robot arm according to one of the preceding claims,
**characterised in that**
- the biasing angle (β) between the component (36b') facing the other guide body (31a, b) and the axial direction (4') is < 50°, better < 45°, better < 40°, better < 35°, better < 30°.

12. Robot arm according to one of the preceding claims,
**characterised in that**
- the axial guide (6) is a guide sleeve (6).

13. Robot arm according to one of the preceding claims,
**characterised in that**
- the axial guide (6) is attached to a lower arm (3) of a robot arm (1), in particular rotatable about its axial direction.

14. Robot arm according to one of the preceding claims,
**characterised in that**
- the axial strut (4) comprises two partial struts (4a, b) which are displaceable in the axial direction (4') relative to one another and in each case to the axial guide (6),
- at least one guide surface (30.1) is arranged on each of the two partial struts (4a, b).

15. Robot arm according to claim 14,
**characterised In that**
- the two struts (4a, b) have a prism-shaped cross-section,
- two guide surfaces (30.1 - 30.2) are arranged on each of the two partial struts (4a, b),
- the two guide surfaces (30.1, 30.2) are preferably at right angles to each other in the axial direction (4'),
- preferably the third surface of the prism is a sliding surface lying against the other strut (4b, a).

16. Robot arm according to one of the preceding claims,
**characterised In that**
- an axial drive unit (8) with at least one stroke motor is provided, which effects the traversing movement of the axial strut (4),
- all lifting motors are attached to the axial guide (6).

17. Robot arm according to one of the preceding claims with
- an upper arm (2) which can be pivoted relative to the environment (9) about a, in particular only one, first pivot axis (10),
- a lower arm (3) which is attached to the upper arm (2) so as to be pivotable relative to the upper arm (2) about a second, in particular only a second, pivot axis (11),
**characterised In that**
- the axial guide (6) is attached to the free end of the lower arm (3).

## Revendications

1. **Bras de robot** (1), comprenant
- une unité axiale (5) qui comprend un guidage axial (6) et qui est fixée au bras de robot (1),
- une entretoise axiale (4) qui peut être déplacée par rapport au guidage axial (6) dans sa direction axiale (4'),
- les surfaces de guidage (6a) du guidage axial (6) guident l'entretoise axiale (4) de manière à la bloquer en rotation
- en ce que le guidage axial (6), vu dans la direction axiale (4'), présente un contour intérieur non rond qui coopère par complémentarité de forme avec une circonférence extérieure non ronde correspondante de l'entretoise axiale (4),
- l'entretoise axiale (4), vu dans la direction axiale (4'), présente au moins trois surfaces de guidage (30.1 - 30.3) s'étendant dans la direction axiale (4'), sur chacune desquelles s'appuie au moins un corps de guidage (31a) du guidage axial (6),
- pour au moins l'une des surfaces de guidage (30.1), ledit au moins un corps de guidage (31a) qui s'y applique est précontraint en direction de cette surface de guidage (30.1) au moyen d'un dispositif de précontrainte (40) ou vice versa,
- dans lequel deux corps de guidage (31a, b) sont disposés à distance dans la direction axiale (4') qui s'appliquent contre la même surface de guidage (30.1),
- la précontrainte des corps de guidage (31a, b)
- soit par rapport au corps de base du guidage axial (6) au moyen de ressorts
- soit l'un par rapport à l'autre au moyen d'un ressort de traction (34) de telle sorte que le dispositif de précontrainte présent pour chaque corps de guidage présente une composante qui est dirigée vers l'entretoise axiale (4), c'est-à-dire le milieu de la section transversale du guidage axial (6), et présente une composante vers l'autre corps de guidage conditionnée par la précontrainte des deux corps de guidage (31a, b) l'un par rapport à l'autre,
**caractérisé en ce que**
- le ressort de traction (34) est logé dans un évidement de ressort (37) ouvert vers la circonférence extérieure du corps de base du guidage axial (6) de telle sorte que le ressort de traction (34) peut être saisi et remplacé à partir de la circonférence extérieure.

2. Bras de robot selon la revendication 1
**caractérisé en ce que**
- l'entretoise axiale (4) ne présente que trois surfaces de guidage (30.1 - 30.3) réparties sur la circonférence, en particulier uniformément réparties sur la circonférence,
- dont l'angle intermédiaire (α) est notamment différent de 90°.

3. Bras de robot selon l'une des revendications précédentes
**caractérisé en ce que**
- l'entretoise axiale (4) présente deux paires de deux surfaces de guidage (30.1 - 30.4) opposées l'une à l'autre, notamment par rapport au milieu de la section transversale de l'entretoise axiale (4), et s'étendant dans la direction axiale (4'),
- de préférence, les surfaces de guidage (30.1, 30.2) d'une paire s'étendant parallèlement l'une à l'autre.

4. Bras de robot selon l'une des revendications précédentes
**caractérisé en ce que**
- seul ledit au moins un corps de guidage (31a) reposant sur l'une des surfaces de guidage (30.1) d'une telle paire est précontraint par rapport à cette surface de guidage (30.1).

5. Bras de robot selon l'une des revendications précédentes,
**caractérisé en ce que**
- les corps de guidage (31a, b), notamment chaque corps de guidage, comprennent au moins un élément de roulement (32), notamment au moins un palier de roulement (32).

6. Bras de robot selon la revendication 5,
**caractérisé en ce que**
- les corps de roulement (32), en particulier les paliers de roulement (32), présentent une ouverture de passage centrale (32a) à travers laquelle s'étend un boulon de palier (35),
- dont les extrémités (35a, b) font saillie de part et d'autre de la face frontale d'au moins un corps de roulement (32), notamment palier de roulement (32).

7. Bras de robot selon l'une des revendications 5 ou 6,
**caractérisé en ce que**
- les boulons de paliers (35), des deux corps de guidage (31a, b) espacés dans la direction axiale (4') et comprenant des corps de roulement (32), sont précontraints l'un contre l'autre, notamment au moyen d'un ressort de traction (34),
- en particulier **en ce que** les extrémités des boulons de palier (35) sont guidées dans des rainures (36) ou des trous oblongs (36) du corps de base du guidage axial (6), dont la direction d'extension (36') présente une composante (36a') dirigée vers l'entretoise axiale (4) ainsi qu'une composante (36b') dirigée vers l'autre corps de guidage (31a, b).

8. Bras de robot selon la revendication 7,
**caractérisé en ce que**
- les boulons de palier (35) présentent chacun une rainure d'accrochage à la même position axiale,
- qui, à l'état monté des corps de guidage (31a, b), se trouvent entre les flancs de l'évidement de ressort (37),
- la rainure d'accrochage est un peu plus large que l'extrémité décapitée, notamment recourbée en crochet d'accrochage (34a, b), du ressort de traction (34), qui est logé dans la rainure d'accrochage à l'état monté.

9. Bras de robot selon l'une des revendications 5 à 7,
**caractérisé en ce que**
- le ressort de traction (34) est accroché par chacun de ses crochets d'accrochage (34a, b) à un boulon d'accrochage (38) respectif,
- le boulon d'accrochage (38) est fixé à distance à l'un des boulons de palier (35a), à distance en direction de l'autre boulon de palier (35b), espacé dans la direction axiale (4').

10. Bras de robot selon la revendication 9,
**caractérisé en ce que**
le boulon d'accrochage (38) et le boulon de palier (35) sont reliés l'un à l'autre par l'intermédiaire de deux entretoises de liaison (39), en particulier des plaques de liaison (39), qui sont espacées dans leur direction d'extension et qui présentent des alésages de passage (39a, b) disposés à la même distance l'un de l'autre, à travers l'un desquels s'étend le boulon de palier (35) et à travers l'autre desquels s'étend le boulon d'accrochage (38).

11. Bras de robot selon l'une des revendications précédentes,
**caractérisé en ce que**
- l'angle de précontrainte (β) entre la composante (36b') orientée vers l'autre corps de guidage (31a, b) et la direction axiale (4') est < 50°, mieux < 45°, mieux < 40°, mieux < 35°, mieux < 30°.

12. Bras de robot selon l'une des revendications précédentes,
**caractérisé en ce que**
- le guidage axial (6) est un manchon de guidage (6).

13. Bras de robot selon l'une des revendications précédentes,
**caractérisé en ce que**
- le guidage axial (6) est fixé à un avant-bras (3) d'un bras de robot (1), notamment de manière rotative autour de sa direction axiale.

14. Bras de robot selon l'une des revendications précédentes
**caractérisé en ce que**
- l'entretoise axiale (4) comprend deux entretoises partielles (4a, b) qui peuvent être déplacées l'une par rapport à l'autre dans la direction axiale (4') ainsi que respectivement par rapport au guidage axial (6),
- au moins une surface de guidage (30.1) est disposée sur chacune des deux entretoises partielles (4a, b).

15. Bras de robot selon la revendication 14,
**caractérisé en ce que**
- les deux entretoises partielles (4a, b) présentent une section transversale en forme de prisme,
- deux surfaces de guidage (30.1 - 30.2) sont disposées sur chacune des deux entretoises partielles (4a, b),
- les deux surfaces de guidage (30.1, 30.2) sont de préférence à angle droit l'une par rapport à l'autre dans la direction axiale (4'),
- de préférence, la troisième surface du prisme est une surface de glissement en contact avec l'autre entretoise partielle (4b, a).

16. Bras de robot selon l'une des revendications précédentes,
**caractérisé en ce que**
- il existe une unité d'entraînement axial (8) avec au moins un moteur de levage, qui provoque le mouvement de déplacement de l'entretoise axiale (4),
- tous les moteurs de levage sont fixés au guidage axial (6).

17. Bras de robot selon l'une des revendications précédentes, avec
- un bras supérieur (2) qui peut pivoter par rapport à l'environnement (9) autour d'un premier axe de pivotement (10), en particulier autour d'un premier axe seulement,
- un avant-bras (3) qui est fixé au bras supérieur (2) de manière à pouvoir pivoter par rapport au bras supérieur (2) autour d'un deuxième axe de pivotement (11), en particulier autour d'un deuxième axe seulement,
**caractérisé en ce que**
- le guidage axial (6) est fixé à l'extrémité libre de l'avant-bras (3).
